(19) Europäisches Patentamt / European Patent Office / Office européen des brevets

(11) **EP 3 308 564 B1**

(12) **FASCICULE DE BREVET EUROPEEN**

(45) Date de publication et mention de la délivrance du brevet:
**18.11.2020 Bulletin 2020/47**

(21) Numéro de dépôt: **16729003.0**

(22) Date de dépôt: **01.04.2016**

(51) Int Cl.:
*H04W 12/00* (2009.01)     *H04W 12/04* (2009.01)
*H04L 29/06* (2006.01)     *G07C 9/00* (2020.01)
*H04L 29/08* (2006.01)     *H04W 4/00* (2018.01)
*H04W 4/80* (2018.01)

(86) Numéro de dépôt international:
**PCT/FR2016/000062**

(87) Numéro de publication internationale:
**WO 2016/156681 (06.10.2016 Gazette 2016/40)**

(54) **PROCÉDÉ DE CHARGEMENT D'UNE CLÉ VIRTUELLE ET TERMINAL UTILISATEUR ASSOCIÉ**

VERFAHREN ZUM LADEN EINER VIRTUELLEN SCHLÜSSELS UND ZUGEHÖRIGES BENUTZERENDGERÄT

PROCÉDÉ DE CHARGEMENT D'UNE CLÉ VIRTUELLE ET TERMINAL UTILISATEUR ASSOCIÉ

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2015 FR 1552818**

(43) Date de publication de la demande:
**18.04.2018 Bulletin 2018/16**

(73) Titulaire: **Valeo Comfort and Driving Assistance 94046 Créteil Cedex (FR)**

(72) Inventeurs:
• **CHALOCHET Aymeric**
  **94046 Créteil CEDEX (FR)**
• **MASSON Fabienne**
  **94046 Créteil CEDEX (FR)**
• **LECONTE Eric**
  **94046 Créteil CEDEX (FR)**
• **MENARD Eric**
  **94046 Créteil CEDEX (FR)**

(74) Mandataire: **Delplanque, Arnaud VALEO Comfort and Driving Assistance 76, rue Auguste Perret Z.I. Europarc 94046 Créteil Cedex (FR)**

(56) Documents cités:
**US-A1- 2010 040 234     US-A1- 2013 099 892
US-A1- 2014 277 837**

## Description

DOMAINE TECHNIQUE AUQUEL SE RAPPORTE L'INVENTION

La présente invention concerne la commande de certaines fonctionnalités d'un véhicule au moyen d'un terminal utilisateur.

Elle concerne plus particulièrement un procédé de chargement d'une clé virtuelle, ainsi qu'un terminal utilisateur associé.

L'invention s'applique particulièrement avantageusement dans le cas où l'on souhaite qu'un autre terminal utilisateur puisse autoriser ce terminal utilisateur à commander une fonctionnalité d'un véhicule.

ARRIERE-PLAN TECHNOLOGIQUE

Le document US 2013/099 892 propose de pourvoir un premier téléphone portable d'un justificatif au moyen duquel le téléphone portable peut autoriser un accès à un véhicule.

Il est en outre prévu dans ce document que le premier téléphone portable puisse transmettre le justificatif à un second téléphone portable afin que ce dernier ait à son tour la possibilité d'autoriser l'accès dans le véhicule.

OBJET DE L'INVENTION

Dans ce contexte, la présente invention propose un procédé de chargement d'une clé virtuelle dans un terminal utilisateur selon la revendication indépendante 1.

L'utilisation de la donnée d'appariement reçue de l'autre terminal utilisateur permet ainsi au terminal utilisateur d'obtenir la clé virtuelle et de pouvoir commander la fonctionnalité du véhicule. La clé virtuelle est toutefois délivrée par l'unité électronique du véhicule, ce qui permet un meilleur contrôle par l'unité électronique des clés virtuelles existantes.

On remarque que la donnée transmise peut être la donnée d'appariement elle-même, ou' une donnée déterminée à partir de la donnée d'appariement et qui permettra à l'unité électronique de commande de vérifier (par exemple par utilisation d'un protocole de type défi-réponse) que le terminal utilisateur détient (*i.e.* mémorise) bien la donnée d'appariement.

Le procédé peut d'ailleurs comprendre une étape de vérification, par l'unité électronique, de la correspondance entre la donnée transmise et une donnée correspondante déterminée par l'unité électronique, la clé virtuelle étant alors transmise seulement en cas de vérification positive.

La clé virtuelle reçue peut être mémorisée par le terminal utilisateur, afin par exemple d'être utilisée au cours des étapes suivantes du procédé :

- réception, par le terminal utilisateur, d'un défi en provenance de l'unité électronique ;
- détermination, par le terminal utilisateur, d'une donnée d'authentification en fonction de la clé virtuelle et du défi reçu ;
- émission, par le terminal utilisateur et à destination de l'unité électronique, de la donnée d'authentification.

Le procédé peut alors comprendre les étapes suivantes :

- vérification, par l'unité électronique, de la donnée d'authentification reçue du terminal utilisateur ;
- commande, par l'unité électronique, de la fonctionnalité du véhicule en cas de vérification positive.

La donnée d'appariement est par exemple déterminée en fonction de la donnée de délégation et d'au moins une borne temporelle.

On peut prévoir dans ce cas que l'unité électronique transmette ou non la clé virtuelle au terminal utilisateur en fonction du résultat d'une comparaison entre un instant courant et la borne temporelle, et/ou que la commande de la fonctionnalité soit réalisée ou non en fonction du résultat d'une comparaison entre un instant courant et la borne temporelle,

En pratique, la transmission de la donnée dépendant de la donnée d'appartenance et la réception de la clé virtuelle peuvent être réalisées via une liaison sans fil (par exemple de type Bluetooth) établie entre le terminal utilisateur et le véhicule.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un exemple de contexte initial dans lequel peut être mise en œuvre l'invention ;
- la figure 2 représente schématiquement des composants, utiles à la compréhension de l'invention, d'un véhicule et d'un premier terminal utilisateur ;
- la figure 3 présente, sous forme de logigramme, un exemple de procédé de chargement d'une clé de délégation dans une mémoire du premier terminal utilisateur ;
- la figure 4 représente schématiquement le premier terminal utilisateur et un second terminal utilisateur ;
- la figure 5 présente, sous forme de logigramme, un exemple de procédé de transmission d'une clé d'autorisation d'appairage temporaire du premier terminal utilisateur au second terminal utilisateur ;
- la figure 6 présente, sous forme de logigramme, un exemple de procédé d'appariement entre le second terminal utilisateur et une unité électronique de commande du véhicule ; et

- la figure 7 présente, sous forme de logigramme, un exemple de procédé de commande d'une fonctionnalité du véhicule par le second terminal utilisateur,

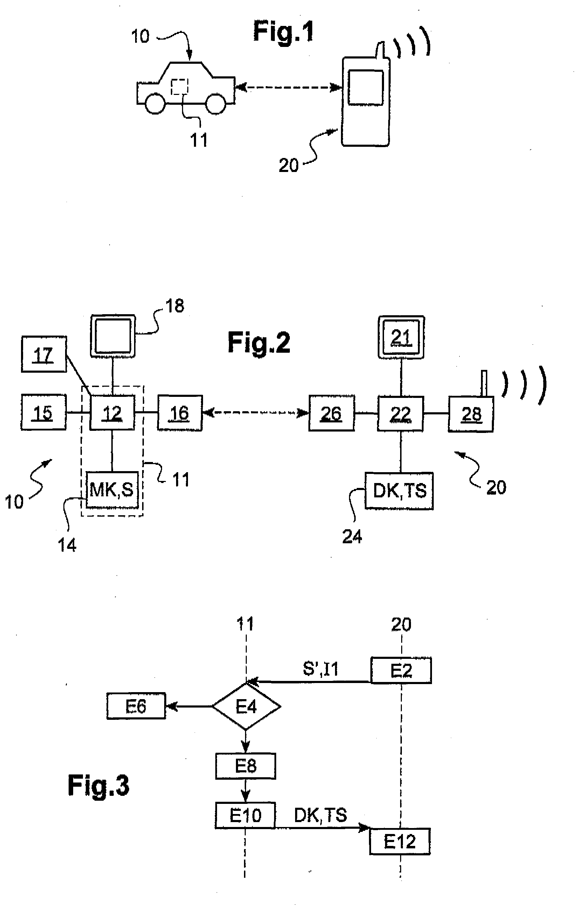

La figure 1 représente un exemple de contexte initial dans lequel peut être mise en œuvre l'invention,

Dans ce contexte, un véhicule 10 comprend une unité électronique de commande 11 (ou ECU pour "*Electronic Control Unit*") qui peut entrer en communication via une liaison sans fil avec un premier terminal utilisateur 20, par exemple un téléphone portable (ou téléphone cellulaire), éventuellement de type "*téléphone intelligent*" ou "*smartphone*" selon la dénomination anglo-saxonne couramment utilisée, afin d'échanger des données avec ce premier terminal utilisateur 20, par exemple en vue de la commande de fonctionnalités du véhicule 10 au moyen du premier terminal utilisateur 20 (une telle fonctionnalité pouvant être par exemple le déverrouillage des portes du véhicule 10).

La liaison sans fil utilisée pour communiquer entre l'unité électronique de commande 11 et le premier terminal utilisateur 20 est par exemple de type Bluetooth.

La figure 2 représente schématiquement des composants, utiles à la compréhension de l'invention, du véhicule 10 et du premier terminal utilisateur 20,

Le véhicule 10 comprend notamment l'unité électronique de commande 11 déjà mentionnée, un premier actionneur 15 (conçu ici pour permettre le déverrouillage des portes du véhicule 10), un second actionneur 17 (conçu pour permettre le démarrage du moteur du véhicule), un module de communication sans fil 16 et une interface utilisateur 18.

L'unité électronique de commande comprend un processeur 12 et une unité de mémorisation 14, par exemple une mémoire non-volatile réinscriptible ou un disque dur.

L'unité de mémorisation 14 mémorise notamment des programmes d'ordinateur comprenant des instructions dont l'exécution par le processeur 12 permet la mise en œuvre par l'unité électronique de commande 11 des procédés décrits ci-dessous.

L'unité de mémorisation 14 mémorise également des données utilisées dans le cadre des procédés décrits ci-dessous, notamment une clé racine (ou clé maître) MK et un code secret S, utilisés comme expliqué dans la suite.

La clé racine MK et/ou le code secret S sont par exemple inscrits dans l'unité de mémorisation 14 lors de la fabrication de l'unité électronique de commande 11, avant montage de cette unité électronique de commande 11 dans le véhicule 10.

Le premier terminal utilisateur 20 comprend un processeur 22, une mémoire 24 (par exemple une mémoire non-volatile réinscriptible), une interface utilisateur 21 (par exemple un écran tactile), un module de communication sans fil 26 et un module de télécommunication 28.

La mémoire 24 du premier terminal utilisateur 20 mémorise une clé de délégation DK à partir de laquelle peuvent être dérivées des clés temporaires d'autorisation d'appariement, comme expliqué plus loin. Cette clé de dérivation DK est par exemple chargée dans la mémoire 24 selon le procédé décrit plus bas en référence à la figure 3.

Par ailleurs, la clé de délégation DK peut être utilisée en tant que clé virtuelle utilisable par le premier terminal utilisateur 20 pour commander une fonctionnalité du véhicule 10. En variante, la mémoire 24 du premier terminal utilisateur 20 peut mémoriser une clé virtuelle supplémentaire dédiée à la commande des fonctionnalités du véhicule 10.

La mémoire 24 mémorise notamment des programmes d'ordinateur comprenant des instructions dont l'exécution par le processeur 22 permet la mise en œuvre par le premier terminal utilisateur 20 des procédés décrits ci-dessous.

Le module de communication sans fil 26 du premier terminal utilisateur 20 permet d'établir une liaison sans fil (ici de type Bluetooth comme déjà Indiqué) avec le module de communication sans fil 16 du véhicule 10 à travers laquelle le processeur 12 de l'unité électronique de commande 11 et le processeur 22 du premier terminal utilisateur 20 peuvent échanger des données, notamment comme exposé plus loin.

Le module de télécommunication 28 permet au premier terminal utilisateur 20 (et précisément au processeur 22 équipant ce premier terminal utilisateur 20) d'échanger des données avec d'autres dispositifs électroniques, en particulier avec un second terminal utilisateur mentionné plus bas. Le module de télécommunication 28 permet pour ce faire de se connecter à un réseau sur lequel sont également connectés ces autres dispositifs électroniques, par exemple un réseau de téléphonie mobile ou un réseau informatique (tel qu'un réseau local sans fil).

Dans certains modes de réalisation (notamment lorsque le premier terminal utilisateur 20 peut fonctionner en tant que téléphone cellulaire), le module de télécommunication 28 peut comprendre une carte à puce qui mémorise des données de connexion associées à un abonnement à un service de téléphonie mobile et permettant d'établir la connexion sur le réseau de téléphonie mobile précité.

La figure 3 présente, sous forme de logigramme, un exemple de procédé de chargement de la clé de délégation DK dans la mémoire 24 du premier terminal utilisateur 20.

Les échanges de données décrits ci-dessous sont effectués entre le processeur 12 de l'unité électronique de commande 11 et le processeur 22 du premier terminal utilisateur 20 via les modules de communication sans fil 16, 26. Ces échanges de données peuvent être sécurisés (et notamment chiffrés) en utilisant par exemple une fonctionnalité de sécurité (par exemple de chiffrement) des modules de communication sans fil 16, 26 ou en utilisant des moyens classiques de sécurité (par exemple de chiffrement), tel que ceux fournis dans une infrastructure à clé publique (ou PKI pour "*Public Key Infrastructure*").

Le procédé de la figure 3 débute à l'étape E2 par l'émission, par le premier terminal utilisateur 20 (c'est-à-dire en pratique par son processeur 22 via le module de communication sans fil 26), d'un code secret S' et d'un Identifiant I1 du premier terminal utilisateur 20 à destination de l'unité électronique de commande 11.

Le code secret S' a par exemple été au préalable saisi sur l'interface utilisateur 21 par l'utilisateur du premier terminal utilisateur 20. Pour ce faire, le code secret S' est par exemple communiqué à l'utilisateur lors de l'achat du véhicule. En variante, ce code secret S' peut être inscrit sur une étiquette apposée dans le véhicule 10 (de manière à être visible seulement par une personne ayant accès au véhicule 10, typiquement au moyen de la clé physique du véhicule 10).

Le code secret S' peut également être reçu au préalable par le premier terminal utilisateur 20 via le module de télécommunication 28, par exemple dans un message électronique ou un minimessage (ou SMS pour "*Short Message System*"). Pour ce faire, l'utilisateur communique son adresse électronique ou son numéro de téléphone lors de l'achat du véhicule 10.

L'identifiant I1 est par exemple un numéro associé au terminal utilisateur 20, tel que le numéro d'appel attribué à l'utilisateur dans le cadre de son abonnement au service de téléphonie mobile susmentionné (ou MSISDN pour "*Mobile Station ISDN number*"), le numéro d'abonné (ou IMSI pour "*International Subscriber Mobile Identity*") de l'utilisateur ou l'Identifiant du terminal utilisateur 20 (ou IMEI pour "*International Mobile Equipment Identity*").

L'unité électronique de commande 11 reçoit le code secret S' et l'identifiant I1 et peut ainsi comparer à l'étape E4 le code secret reçu S' au code secret S mémorisé dans l'unité de mémorisation 14 de l'unité électronique de commande 11.

En temps normal (c'est-à-dire lorsque le code secret S' a été effectivement obtenu par l'utilisateur comme indiqué ci-dessus suite à l'achat du véhicule 10), le code secret reçu S' correspond au code secret mémorisé S et le procédé se poursuit à l'étape E8 décrite plus bas. On peut en outre prévoir qu'une condition supplémentaire doive être réalisée avant de procéder à l'étape E8, par exemple la réalisation par l'utilisateur d'une action particulière dans le véhicule (telle qu'une validation sur l'interface utilisateur 18), ou la détection d'une clé physique du véhicule 10 à proximité par l'unité électronique de commande 11, ou encore une action sur la clé physique du véhicule 10.

Si le code secret reçu S' diffère en revanche du code secret mémorisé S, cela signifie que le code secret S' n'est pas en réalité celui associé au véhicule 10 (soit à cause d'une erreur de l'utilisateur, soit du fait qu'il s'agit d'une tentative de fraude) et le procédé se termine à l'étape E8 sans chargement de la clé de délégation DK.

Comme indiqué ci-dessus, le procédé se poursuit en fonctionnement normal à l'étape E8 où la clé de délégation DK est calculée (par le processeur 12) par dérivation au moyen de l'application d'une première fonction cryptographique F, utilisant la clé racine MK, à l'identifiant reçu I1 : DK = $F_{MK}$(I1).

La clé de délégation DK obtenue et une estampille temporelle TS (ou "*timestamp*" selon l'appellation anglo-saxonne) générée par le processeur 12 sont transmises de l'unité électronique de commande 11 au premier terminal utilisateur 20 à l'étape E10, ici via la liaison établie entre le module de communication sans fil 16 et le module de communication sans fil 26. Lorsque la clé de délégation DK n'est pas utilisée par le premier terminal utilisateur 20 pour commander une fonctionnalité du véhicule 10, mais qu'une autre clé virtuelle dédiée est prévue pour ce faire, cette autre clé virtuelle peut également être transmise de l'unité électronique de commande 11 au premier utilisateur 20 lors de l'étape E10.

La clé de délégation DK est ainsi reçue par le premier terminal utilisateur 20 (précisément son processeur 22) et peut alors être mémorisée dans la mémoire 24 du premier terminal utilisateur 20 à l'étape E12.

On peut prévoir par ailleurs que le processeur 22 du premier terminal utilisateur 20 se synchronise alors au processeur 12 de l'unité électronique de commande 11 au moyen de l'estampille temporelle TS reçue. En variante, le processeur 22 pourrait commander la mémorisation dans la mémoire 24 de l'estampille temporelle TS reçue, par exemple en association avec l'instant de réception de l'estampille temporelle TS, afin d'avoir accès au décalage temporel entre l'horloge de l'unité électronique de commande 11 et l'horloge du premier terminal utilisateur 20.

Selon encore une autre variante, une estampille temporelle pourrait au contraire être transmise du premier terminal utilisateur 20 à l'unité électronique de commande 11 afin d'y être mémorisée (en association avec l'instant de réception de l'estampille temporelle et l'identifiant I1 du premier terminal utilisateur 20), l'unité électronique de commande 11 gérant dans ce cas le décalage temporel précité.

Dans le mode de réalisation qui vient d'être décrit, le code secret S est mémorisé dans l'unité de mémorisation 14 lors de la production de l'unité électronique de commande 11 et/ou du véhicule 10, puis est requis avant de délivrer la clé de délégation DK (ainsi qu'éventuellement une autre clé virtuelle de commande des fonctionnalités du véhicule 10) au premier terminal utilisateur 20.

Selon une variante envisageable, le code secret S pourrait être saisi par l'utilisateur au niveau de l'interface utilisateur 18 du véhicule 10, afin d'être ensuite mémorisé dans l'unité de mémorisation 14 de l'unité électronique de commande. Conformément au procédé décrit ci-dessus (étape E2), l'utilisateur doit alors dans ce cas saisir un code secret S'identique sur son terminal utilisateur 20 afin que ce code secret S' soit transmis à l'unité électronique de commande 11 et autorise l'unité électronique de commande 11 à délivrer la clé de délégation DK (ainsi qu'éventuellement une autre clé virtuelle de commande des fonctionnalités du véhicule 10).

Selon une autre variante envisageable, la délivrance de la clé de délégation DK (ainsi qu'éventuellement d'une autre clé virtuelle de commande des fonctionnalités du véhicule 10) ne nécessite pas la fourniture d'un code secret, mais ne peut être initiée que dans le cadre de l'exécution par l'unité électronique de commande 11 d'un service de diagnostic, tel que ceux utilisés en concession.

Selon une autre variante, la clé délégation DK (ainsi qu'éventuellement une autre clé virtuelle de commande des fonctionnalités du véhicule 10) peut être transmise au premier terminal utilisateur 20 depuis un serveur distant, par exemple via le module de télécommunication 28 (une session sécurisée, permettant un échange de données chiffré, étant par exemple préalablement mise en place entre le processeur 22 du premier terminal utilisateur 20 et ce serveur distant).

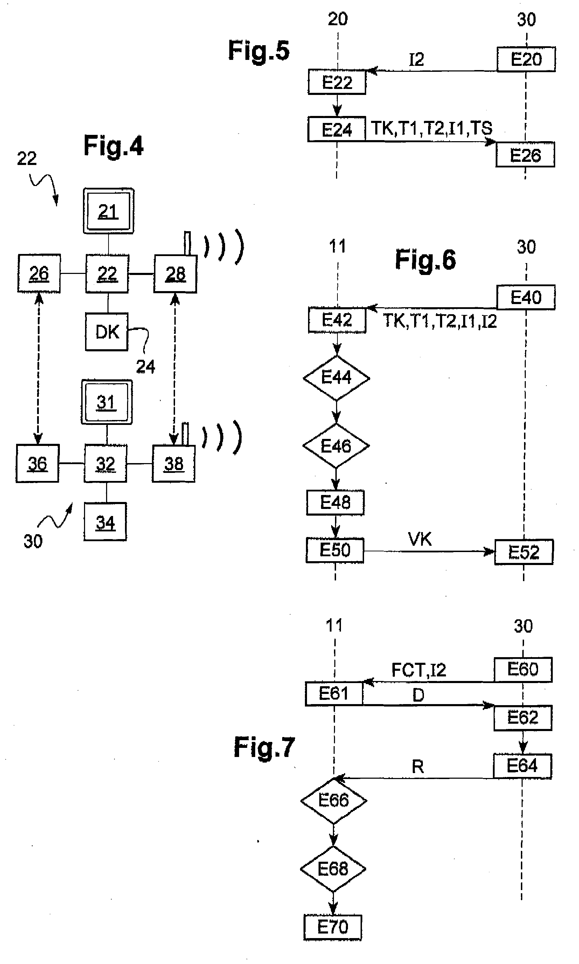

La figure 4 représente schématiquement le premier terminal utilisateur 20 et un second terminal utilisateur 30 dans une situation où ils peuvent échanger des données comme expliqué ci-après.

Le second terminal utilisateur 30 est par exemple du même type que le premier terminal utilisateur 20, et comprend ainsi des éléments similaires à ceux du premier terminal utilisateur 20, désignés en figure 4 par une référence augmentée de dix par rapport aux éléments équivalents du premier terminal utilisateur 20. Le second terminal utilisateur 30 ne sera donc pas décrit en détail et on pourra se référer à la description donnée ci-dessus du premier terminal utilisateur 20 pour plus de précisions sur les éléments du second terminal utilisateur 30.

Le second terminal utilisateur 30 comprend ainsi notamment un processeur 32, une mémoire 34 (par exemple une mémoire non-volatile réinscriptible), une interface utilisateur 31 (par exemple un écran tactile), un module de communication sans fil 36 (conçu ici pour mettre en œuvre une liaison de type Buletooth) et un module de télécommunication 38 (conçu pour se connecter à un réseau, par exemple un réseau local sans fil ou un réseau de téléphonie mobile, sur lequel est également connecté le premier terminal utilisateur 20).

La mémoire 34 mémorise notamment des programmes d'ordinateur comprenant des instructions dont l'exécution par le processeur 32 permet la mise en œuvre par le second terminal utilisateur 30 des procédés décrits ci-dessous.

Comme représenté par des flèches en pointillés en figure 4, le premier terminal utilisateur 20 et le second terminal utilisateur 30 peuvent ainsi échanger des données soit au moyen d'une liaison (ici de type Bluetooth) établie entre les modules de communication sans fil 26, 36, soit via un réseau (par exemple un réseau local sans fil ou un réseau de téléphonie mobile) auquel le premier terminal 20 et le second terminal utilisateur 30 se connectent à ce réseau respectivement au moyen du module de communication 28 et du module de télécommunication 38. Ces -échanges de données peuvent être sécurisés, par exemple chiffrés.

Dans le procédé décrit ci-dessous, les terminaux utilisateur 20, 30 utilisent l'une des deux possibilités envisagées ci-dessus pour échanger des données entre eux.

La figure 5 présente, sous forme de logigramme, un exemple de procédé de transmission d'une clé d'autorisation d'appairage temporaire TK du premier terminal utilisateur 20 au second terminal utilisateur 30.

Ce procédé est mis en œuvre lorsque l'on souhaite utiliser le second terminal utilisateur 30 pour commander une fonctionnalité du véhicule 10, ici de manière temporaire.

Le procédé de la figure 5 débute à l'étape E20, à laquelle le second terminal utilisateur 30 transmet au premier terminal utilisateur 20 une demande de la clé d'autorisation d'appairage temporaire TK (dans le but de pouvoir commander ultérieurement une fonctionnalité du véhicule). Le second terminal utilisateur 30 joint par exemple à cette demande son Identifiant I2. Comme déjà indiqué à propos du premier terminal utilisateur 20, un tel identifiant I2 est par exemple le numéro d'appel attribué à l'utilisateur dans le cadre de son abonnement au service de téléphonie mobile susmentionné (ou MSISDN pour "*Mobile Station ISDN number*"), le numéro d'abonné (ou IMSI pour "*International Subscriber Mobile Identity*") de l'utilisateur ou l'identifiant du terminal utilisateur concerné (ou IMEI pour "*International Mobile Equipment Identity*").

Dans certains modes de réalisation, le second terminal utilisateur 30 peut joindre en outre une liste des fonctionnalités du véhicule 10 que l'utilisateur souhaite commander au moyen du second terminal utilisateur 30.

Le premier terminal utilisateur 20 reçoit la demande accompagnée de l'Identifiant I2 du second terminal utilisateur 30 et peut ainsi calculer à l'étape E22 la clé d'autorisation d'appairage temporaire TK destinée au second terminal utilisateur 30, par exemple comme suit.

On propose ici, comme décrit ci-dessous, que la clé d'autorisation d'appairage temporaire TK permette d'obtenir une clé virtuelle VK valable entre un temps T1 et un temps T2 (référencés ici par rapport à l'horloge de l'unité électronique de commande 11). Ces bornes temporelles T1, T2 sont par exemple choisies par l'utilisateur du premier terminal utilisateur 20 (éventuellement par saisie dans l'interface utilisateur 21) et définissent (entre elles) une période (par exemple de plusieurs jours ou plusieurs semaines) pendant laquelle le second terminal utilisateur 30 pourra commander au moins une fonctionnalité du véhicule 10.

Dans l'exemple décrit ici, la clé d'autorisation d'appairage temporaire TK est dérivée par application d'une seconde fonction cryptographique G utilisant la clé de dérivation DK à un ensemble de données comprenant la première borne temporelle T1, la seconde borne temporelle T2, l'identifiant I1 du premier terminal utilisateur 20 et l'identifiant I2 du second terminal utilisateur 30 :

$$TK = G_{DK}(T1, T2, I1, I2).$$

Ces données sont par exemple concaténées avant application de la seconde fonction cryptographique G. L'ensemble de données auquel la seconde fonction cryptographique G est appliquée peut comprendre d'autres données, par exemple un nombre aléatoire ou une valeur représentative des fonctionnalités que le second terminal utilisateur 30 pourra commander.

On peut prévoir en effet que l'utilisateur du premier terminal utilisateur 20 sélectionne (au moyen de l'interface utilisateur 21) les fonctionnalités du véhicule 10 qui pourront être commandées par le second terminal utilisateur 30 et que le premier terminal utilisateur 20 génère ainsi une liste de ces fonctionnalités et/ou un topogramme binaire (ou "*bitmap*" selon l'appellation anglo-saxonne) indiquant quelles fonctionnalités pourront être commandées par le second terminal utilisateur 30 (le topogramme binaire correspondant à la valeur représentative mentionnée plus haut). Dans les modes de réalisation évoqués plus haut où une liste des fonctionnalités souhaitées est jointe à la demande émise à l'étape E22, les fonctionnalités mentionnées dans la liste générée par le premier terminal utilisateur 20 ou indiquées dans le topogramme binaire peuvent être par exemple un sous-ensemble de la liste des fonctionnalités souhaitées.

Le premier terminal utilisateur 20 transmet ensuite au second terminal utilisateur 30 la clé d'autorisation d'appairage temporaire TK, la première borne temporelle T1, la seconde borne temporelle T2, son identifiant I1 et l'estampille temporelle TS (étape E24), ainsi qu'éventuellement le nombre aléatoire susmentionné et la liste (ou le topogramme binaire représentatif) des fonctionnalités à commander.

Le second terminal utilisateur 30 reçoit ces données et peut ainsi les mémoriser dans la mémoire 34 à l'étape E26. On remarque que l'estampille temporelle TS permet au second terminal utilisateur 30 de connaître le décalage entre sa propre horloge et l'horloge de l'unité électronique de commande 11, laquelle est utilisée comme référence comme déjà indiqué.

La clé d'autorisation d'appairage temporaire TK mémorisée dans la mémoire 34 du second terminal utilisateur 30 peut alors être utilisée pour apparier le second terminal utilisateur 30 et l'unité électronique de commande 11 afin que le second terminal utilisateur 30 obtienne une clé virtuelle VK de commande des fonctionnalités du véhicule 10, comme décrit à présent.

La figure 6 présente, sous forme de logigramme, un exemple de procédé d'appariement entre le second terminal utilisateur 30 et l'unité électronique de commande 11 du véhicule 10.

Ce procédé est par exemple mis en œuvre lorsque le second terminal utilisateur 30 est approché du véhicule 10 et qu'une liaison (ici de type Bluetooth) s'établit entre le module de communication sans fil 16 du véhicule 10 et le module de communication sans fil 36 du second terminal utilisateur 30. Cette liaison peut être sécurisée, par exemple par chiffrement des données échangées.

Le procédé de la figure 6 débute à l'étape E40 par l'émission, par le second terminal utilisateur 30, de la clé d'autorisation d'appairage temporaire TK, de la première borne temporelle T1, de la seconde borne temporelle T2, de l'identifiant I1 du premier terminal utilisateur 20 et de son identifiant I2 à destination de l'unité électronique de commande 11. Cette émission est par exemple initiée par une action de l'utilisateur sur l'interface utilisateur 31 du second terminal 30. Dans les cas évoqués ci-dessus où un nombre aléatoire et une liste (ou un topogramme binaire représentatif) des fonctionnalités à commander sont utilisés, ces éléments sont également transmis à l'unité électronique de commande à l'étape E40.

Le processeur 12 de l'unité électronique de commande 11 peut alors calculer à l'étape E42 la clé TK' normalement associée aux bornes temporelles T1, T2, à l'identifiant I1 (associé à la clé de délégation DK attribuée à l'étape E10 décrite ci-dessus) et à l'identifiant I2 du terminal utilisateur 30 ayant émis les données à l'étape E40. Lors de ce calcul, le processeur 12 utilise par exemple la clé racine MK mémorisée dans l'unité de mémorisation 14 :

$$TK' = G_{FMK(I1)}(T1, T2, I1, I2).$$

En variante, la clé de délégation DK peut être mémorisée dans l'unité de mémorisation 14 en association avec l'identifiant I1 (lors de l'étape E8 décrite plus haut) et le processeur 12 peut alors calculer la clé TK' en utilisant la valeur DK mémorisée : TK' = $G_{DK}$(T1, T2, I1, I2).

Le processeur 12 de l'unité électronique de commande 11 peut ainsi vérifier à l'étape E44 que la clé d'autorisation d'appairage temporaire TK reçue du second terminal utilisateur 30 est bien égale à la clé TK' associée aux paramètres T1, T2, I1, I2.

Si cette vérification n'est pas réalisée correctement, il est mis fin au procédé d'appairage sans émission d'une clé virtuelle par l'unité électronique de commande.

Si la validité de la clé d'autorisation d'appairage temporaire TK reçue est vérifiée à l'étape E44, le processeur 12 vérifie à l'étape E46 que l'instant courant t (donné par l'horloge de l'unité électronique de commande 11) est bien compris entre les bornes temporelles T1 et T2, c'est-à-dire qu'on a bien : T1 < t < T2.

En variante, on pourrait se contenter de vérifier que la période de temps définie par les bornes temporelles T1, T2 n'a pas expiré (même si cette période n'a pas débuté), c'est-à-dire que l'on a bien : t < T2.

Si la vérification de l'étape E46 a un résultat négatif, la remise d'une clé virtuelle au second terminal utilisateur 30 n'est pas autorisée et il est mis fin au processus d'appariement.

Si la vérification de l'étape E46 est réalisée correctement, le procédé se poursuit à l'étape E48. D'autres vérifications peuvent alors éventuellement être effectuées, par exemple la vérification que l'identifiant I1 correspond bien à un identifiant pour lequel une clé de délégation a été délivrée (l'identifiant I1 pouvant pour ce faire être mémorisé dans l'unité de mémorisation 14 lors du passage à l'étape E8 décrite ci-dessus) ou la vérification que l'identifiant I2 est bien l'identifiant du terminal utilisateur avec lequel l'unité électronique de commande 11 est en communication via le module de communication sans fil 16.

Si l'ensemble des vérifications est correctement effectué, le processeur 12 calcule à l'étape E48 une clé virtuelle (ici temporaire) VK, par exemple en dérivant cette clé virtuelle VK par application d'un troisième algorithme cryptographique H utilisant la clé racine MK à des données incluant la première borne temporelle T1 et la seconde borne temporelle T2 : $VK = H_{MK}(T1, T2)$. Ces données peuvent inclure en outre l'identifiant I2 du second terminal utilisateur 30, le nombre aléatoire susmentionné (ou un autre nombre aléatoire) et la liste (ou le topogramme binaire représentatif) des fonctionnalités à commander,

Le processeur 12 peut également lors de cette étape E48 commander la mémorisation dans l'unité de mémorisation 12, en association avec l'Identifiant I2 du second terminal utilisateur 30, des bornes temporelles T1, T2 et, éventuellement, du nombre aléatoire susmentionné et/ou de la liste (ou du topogramme binaire représentatif) des fonctionnalités à commander et/ou de la clé virtuelle VK.

La clé virtuelle VK peut alors être transmise de l'unité électronique de commande 11 au second terminal utilisateur 30 à l'étape E50. Cette transmission peut être effectuée, comme les échanges précédents, via la liaison établie entre le module de communication sans fil 16 du véhicule 10 et le module de communication sans fil 36 du second terminal utilisateur 30.

En variante, cette transmission pourrait être réalisée via un autre canal de communication, par exemple par émission d'un minimessage par l'unité électronique de commande 11 (dotée dans ce cas d'un moyen de connexion à un réseau de téléphonie mobile) à destination du second terminal utilisateur 30 (identifié sur ce réseau de téléphonie mobile par son identifiant I2 lorsque cet identifiant est son numéro d'appel comme indiqué ci-dessus), auquel cas la transmission utilise le module de télécommunication 38 du second terminal utilisateur 30.

Quoiqu'il en soit, le second terminal utilisateur 30 reçoit la clé virtuelle VK et mémorise cette clé virtuelle VK dans sa mémoire 34 à l'étape E52.

Dans le procédé qui vient d'être décrit, la clé d'autorisation d'appairage temporaire TK est transmise à l'unité électronique de commande 11 pour vérification de sa valeur à l'étape E44. En variante, on pourrait prévoir que cette vérification s'effectue sans transmission de la clé TK, par exemple au moyen d'un échange de type défi-réponse (ou "challenge-response" selon l'application anglo-saxonne).

La figure 7 présente, sous forme de logigramme, un exemple de procédé de commande d'une fonctionnalité du véhicule 10 par le second terminal utilisateur 30. Dans ce but, l'unité électronique de commande 11 du véhicule 10 et le second terminal utilisateur 30 échangent des données comme indiqué ci-dessous via une liaison sans fil (par exemple de type Bluetooth) établie au préalable entre le module de communication sans fil 16 du véhicule 10 et le module de communication sans fil 36 du second terminal utilisateur 30.

Le procédé de la figure 7 commence par une étape E60 d'émission par le second terminal utilisateur 30 d'une demande de mise en œuvre de la fonctionnalité concernée, accompagnée par son identifiant I2 et un identifiant FCT de la fonctionnalité, par exemple le déverrouillage des portes du véhicule 10 ou le démarrage du moteur du véhicule 10.

Cette demande est reçue par l'unité électronique de commande 11 ; le processeur 12 de l'unité électronique de commande 11 génère alors un défi D (par exemple par tirage d'un nombre aléatoire) et transmet ce défi D au second terminal utilisateur 30 à l'étape E61.

Le second terminal utilisateur 30 reçoit le défi D et génère à l'étape E62, en fonction de ce défi D et de la clé virtuelle VK, une réponse R. La réponse R est par exemple obtenue par application au défi D d'une quatrième fonction cryptographique J utilisant la clé virtuelle VK : $R = J_{VK}(D)$.

Le terminal utilisateur 30 peut ainsi envoyer la réponse R à l'unité électronique de commande 11 (étape E64).

La réponse R est reçue par l'unité électronique de commande 11 et le processeur 12 de l'unité électronique de commande 11 peut ainsi vérifier cette réponse R à l'étape E66, par exemple en calculant le résultat de l'application au défi D de la quatrième fonction cryptographique J avec la clé virtuelle mémorisée dans l'unité de mémorisation 14 (depuis l'étape E48 décrite plus haut) en association avec l'identifiant I2 du second terminal utilisateur 30, et en comparant ce résultat à la réponse reçue R.

Si cette vérification n'est pas correctement effectuée (c'est-à-dire si le résultat diffère de la réponse reçue R), il est mis fin au processus de commande de la fonctionnalité sans effectuer cette fonctionnalité.

Si la vérification s'effectue normalement à l'étape E66, le processeur 12 vérifie à l'étape E68 que l'instant courant t' (déterminé par l'horloge de l'unité électronique de commande 11) est bien compris dans l'intervalle de temps défini par les bornes temporelles T1, T2, c'est-à-dire si l'on a bien : T1 < t' < T2.

Si la vérification de l'étape E68 ne s'effectue pas correctement, c'est-à-dire si l'instant courant ne fait pas partie de la période temporelle durant laquelle la commande de la fonctionnalité du véhicule par le second terminal utilisateur 30 est autorisée, il est mis fin au processus de commande de la fonctionnalité sans effectuer cette fonctionnalité.

L'étape E88 peut comprendre en outre d'autres vérifications, par exemple une vérification que la fonctionnalité demandée identifiée par l'identifiant FCT est bien autorisée pour le second terminal utilisateur 30 (en consultant la liste ou le topogramme binaire mémorisé(e) dans l'unité de mémorisation 14 en association avec l'identifiant I2 à l'étape E48 décrite ci-dessus).

Si les vérifications des étapes E66 et E68 sont correctement effectuées, l'unité électronique de commande 11 peut commander la fonctionnalité souhaitée, par exemple par commande d'un actionneur dédié 15, 17 (étape E70).

Le second terminal utilisateur 30 peut ainsi commander les fonctionnalités du véhicule 10 (et seulement, dans certains cas, celles indiquées dans la liste de fonctionnalités ou dans le topogramme binaire mémorisé(e) en association avec l'identifiant I2) pendant la période de temps définie par les bornes temporelles T1, T2.

On remarque que le second terminal utilisateur 30 ne mémorise aucune clé de délégation et ne peut pas par conséquent autoriser un autre terminal utilisateur à commander (même temporairement) des fonctionnalités du véhicule 10.

## Revendications

**1.** Procédé de chargement d'une clé virtuelle (VK) dans un terminal utilisateur (30), comprenant les étapes suivantes :

- détermination, par une unité électronique d'un véhicule, d'une donnée de délégation (DK) par dérivation au moyen de l'application d'une première fonction cryptographique (F), utilisant une clé racine (MK) mémorisée dans une unité de mémorisation de l'unité électronique (11) du véhicule (10), à un identifiant d'un autre terminal utilisateur reçu de l'autre terminal utilisateur ;
- transmission (E10) de la donnée de délégation (DK) de l'unité électronique (11) à l'autre terminal utilisateur (20) ;
- détermination (E24), par l'autre terminal utilisateur (20), d'une donnée d'appariement (TK) en fonction de la donnée de délégation (DK) ;
- réception (E26), par le terminal utilisateur (30), de la donnée d'appariement (TK) en provenance de l'autre terminal utilisateur (20) ;
- transmission (E40), par le terminal utilisateur, d'une donnée dépendant de la donnée d'appariement (TK) à l'unité électronique (11) ;
- en réponse à la transmission de la donnée dépendant de la donnée d'appariement, réception (E52), par le terminal utilisateur (30), en provenance de l'unité électronique (11), d'une clé virtuelle (VK) de commande d'au moins une fonctionnalité du véhicule (10) ;

la transmission de la donnée transmise dépendant de la donnée d'appariement (TK) et la réception de la clé virtuelle (VK) étant réalisées via une liaison sans fil établie entre le terminal utilisateur (30) et le véhicule (10).

**2.** Procédé selon la revendication 1, comprenant une étape de vérification (E44), par l'unité électronique, de la correspondance entre la donnée dépendant de la donnée d'appariement transmise (TK) et une donnée correspondante déterminée par l'unité électronique (11), dans lequel la clé virtuelle (VK) est transmise seulement en cas de vérification positive.

**3.** Procédé selon la revendication 1 ou 2, comprenant les étapes suivantes :

- réception (E62), par le terminal utilisateur (30), d'un défi (D) en provenance de l'unité électronique (11) ;
- détermination (E62), par le terminal utilisateur (30), d'une donnée d'authentification (R) en fonction de la clé virtuelle (VK) et du défi reçu (D) ;
- émission (E64), par le terminal utilisateur (30) et à destination de l'unité électronique (11), de la donnée d'authentification (R).

**4.** Procédé selon la revendication 3, comprenant les étapes suivantes :

- vérification (E66), par l'unité électronique (11), de la donnée d'authentification (R) reçue du terminal utilisateur (30) ;
- commande, par l'unité électronique (11), de la fonctionnalité du véhicule (10) en cas de vérification positive.

**5.** Procédé selon l'une quelconque des revendications précédentes, dans lequel la donnée d'appariement (TK) est déterminée en fonction de la donnée de délégation (DK) et d'au moins une borne temporelle (T1 ; T2).

**6.** Procédé selon la revendication 5, dans lequel l'unité électronique (11) transmet ou non la clé virtuelle (VK) au terminal utilisateur (30) en fonction du résultat d'une comparaison entre un instant courant et la borne temporelle (T1 ; T2).

7. Procédé selon la revendication 5 ou 6, les revendications 5 et 6 étant prises dans la dépendance de la revendication 4, dans lequel la commande de la fonctionnalité est réalisée ou non en fonction du résultat d'une comparaison entre un instant courant et la borne temporelle (T1 ; T2).

**Patentansprüche**

1. Verfahren zum Laden eines virtuellen Schlüssels (VK) auf ein Benutzerendgerät (30), die folgenden Schritte umfassend:

   - Bestimmung, durch eine Elektronikeinheit eines Fahrzeugs, eines Delegations-Datenelements (DK) durch Ableitung mittels der Anwendung einer ersten kryptographischen Funktion (F), die einen in einer Speichereinheit der Elektronikeinheit (11) des Fahrzeugs (10) gespeicherten Root-Schlüssel (MK) verwendet, auf eine Kennung eines anderen Benutzerendgerätes, die von dem anderen Benutzerendgerät kommend empfangen wurde;
   - Übertragung (E10) des Delegations-Datenelements (DK) von der Elektronikeinheit (11) an das andere Benutzerendgerät (20);
   - Bestimmung (E24), durch das andere Benutzerendgerät (20), eines Matching-Datenelements (TK) in Abhängigkeit von dem Delegations-Datenelement (DK);
   - Empfang (E26), durch das Benutzerendgerät (30), des von dem anderen Benutzerendgerät (20) stammenden Matching-Datenelements (TK);
   - Übertragung (E40), durch das Benutzerendgerät, eines von dem Matching-Datenelement (TK) abhängigen Datenelements an die Elektronikeinheit (11) ;
   - in Reaktion auf die Übertragung des von dem Matching-Datenelement abhängigen Datenelements, Empfang (E52), durch das Benutzerendgerät (30) von der Elektronikeinheit (11), eines virtuellen Schlüssels (VK) zur Steuerung wenigstens einer Funktionalität des Fahrzeugs (10);

   wobei die Übertragung des übertragenen Datenelements, das von dem Matching-Datenelement (TK) abhängig ist, und der Empfang des virtuellen Schlüssels (VK) über eine drahtlose Verbindung erfolgen, die zwischen dem Benutzerendgerät (30) und dem Fahrzeug (10) eingerichtet ist.

2. Verfahren nach Anspruch 1, welches einen Schritt der Überprüfung (E44), durch die Elektronikeinheit, der Entsprechung zwischen dem von dem übertragenen Matching-Datenelement (TK) abhängigen Datenelement und einem entsprechenden Datenelement, das von der Elektronikeinheit (11) bestimmt wird, umfasst, wobei der virtuelle Schlüssel (VK) nur im Falle einer positiven Überprüfung übertragen wird.

3. Verfahren nach Anspruch 1 oder 2, welches die folgenden Schritte umfasst:

   - Empfang (E62), durch das Benutzerendgerät (30), einer Challenge (D) von der Elektronikeinheit (11) ;
   - Bestimmung (E62), durch das Benutzerendgerät (30), eines Authentifizierungs-Datenelements (R) in Abhängigkeit von dem virtuellen Schlüssel (VK) und von der empfangenen Challenge (D);
   - Senden (E64), durch das Benutzerendgerät (30) und an die Elektronikeinheit (11), des Authentifizierungs-Datenelements (R).

4. Verfahren nach Anspruch 3, welches die folgenden Schritte umfasst:

   - Überprüfung (E66), durch die Elektronikeinheit (11), des Authentifizierungs-Datenelements (R), das von dem Benutzerendgerät (30) kommend empfangen wurde;
   - Steuerung, durch die Elektronikeinheit (11), der Funktionalität des Fahrzeugs (10) im Falle einer positiven Überprüfung.

5. Verfahren nach einem der vorhergehenden Ansprüche, wobei das Matching-Datenelement (TK) in Abhängigkeit von dem Delegations-Datenelement (DK) und von wenigstens einer zeitlichen Begrenzung (T1; T2) bestimmt wird.

6. Verfahren nach Anspruch 5, wobei die Elektronikeinheit (11) den virtuellen Schlüssel (VK) in Abhängigkeit vom Ergebnis eines Vergleichs zwischen einem aktuellen Zeitpunkt und der zeitlichen Begrenzung (T1; T2) an das Benutzerendgerät (30) überträgt oder nicht.

7. Verfahren nach Anspruch 5 oder 6, wobei die Ansprüche 5 und 6 von Anspruch 4 abhängig sind, wobei die Steuerung der Funktionalität in Abhängigkeit vom Ergebnis eines Vergleichs zwischen einem aktuellen Zeitpunkt und der zeitlichen Begrenzung (T1; T2) durchgeführt wird oder nicht.

**Claims**

1. Method for loading a virtual key (VK) into a user terminal (30), comprising the following steps:

   - determination, by an electronic unit of a vehicle, of a delegation datum (DK) by derivation by means of the application of a first cryptographic function (F), using a root key (MK) stored in a memory unit of the electronic unit (11) of the vehicle (10), to an identifier of another user terminal received from the other user terminal;
   - transmission (E10) of the delegation datum (DK) of the electronic unit (11) to the other user terminal (20) ;
   - determination (E24), by the other user terminal (20), of a pairing datum (TK) depending on the delegation datum (DK);
   - reception (E26), by the user terminal (30), of the pairing datum (TK), from the other user terminal (20) ;
   - transmission (E40), by the user terminal, of a datum dependent on the pairing datum (TK) to the electronic unit (11);
   - in response to the transmission of the datum dependent on the pairing datum, reception (E52), by the user terminal (30), from the electronic unit (11), of a virtual key (VK) for controlling at least one functionality of the vehicle (10);

   the transmission of the transmitted datum depending on the pairing datum (TK) and the reception of the virtual key (VK) being carried out via a wireless link set up between the user terminal (30) and the vehicle (10).

2. Method according to Claim 1, comprising a step of verification (E44), by the electronic unit, of the correspondence between the datum dependent on the transmitted pairing datum (TK) and a corresponding datum determined by the electronic unit (11), wherein the virtual key (VK) is transmitted only in case of positive verification.

3. Method according to Claim 1 or 2, comprising the following steps:

   - reception (E62), by the user terminal (30), of a challenge (D), from the electronic unit (11);
   - determination (E62), by the user terminal (30), of an authentication datum (R) depending on the virtual key (VK) and on the received challenge (D);
   - transmission (E64), by the user terminal (30) and to the electronic unit (11), of the authentication datum (R).

4. Method according to Claim 3, comprising the following steps:

   - verification (E66), by the electronic unit (11), of the authentication datum (R) received from the user terminal (30);
   - control, by the electronic unit (11), of the functionality of the vehicle (10) in case of positive verification.

5. Method according to any one of the preceding claims, wherein the pairing datum (TK) is determined depending on the delegation datum (DK) and on at least one time limit (T1; T2) .

6. Method according to Claim 5, wherein the electronic unit (11) transmits or does not transmit the virtual key (VK) to the user terminal (30) depending on the result of a comparison between a current time and the time limit (T1; T2) .

7. Method according to Claim 5 or 6 when dependent on Claim 4, wherein the functionality is controlled or not depending on the result of a comparison between a current time and the time limit (T1; T2).

**Fig.1**

**Fig.2**

**Fig.3**

**Fig.5**

```
        20                    30
         |                     |
         |     I2      ┌─────┐ |
  ┌─────┐|◄────────────│ E20 │ |
  │ E22 │|             └─────┘ |
  └─────┘|                     |
     │   |                     |
     ▼   |                     |
  ┌─────┐| TK,T1,T2,I1,TS      |
  │ E24 │├────────────────►┌─────┐
  └─────┘|                 │ E26 │
         |                 └─────┘
```

**Fig.4**

22 ↘

```
            ┌─────┐
            │ 21  │
            └─────┘
               │
  ┌────┐   ┌────┐   ┌────┐ ))) 
  │ 26 │───│ 22 │───│ 28 │
  └────┘   └────┘   └────┘
     ↕        │         ↕
            ┌────┐
            │ DK │
            └────┘
                 24

            ┌─────┐
            │ 31  │
            └─────┘
               │
  ┌────┐   ┌────┐   ┌────┐ )))
  │ 36 │───│ 32 │───│ 38 │
  └────┘   └────┘   └────┘
               │
            ┌────┐
      30    │ 34 │
            └────┘
```

**Fig.6**

```
        11                    30
         |                     |
         |              ┌─────┐ |
  ┌─────┐| TK,T1,T2,I1,I2│ E40 │
  │ E42 │|◄────────────└─────┘ |
  └─────┘|                     |
     │   |                     |
     ▼   |                     |
   ◇E44◇ |                     |
     │   |                     |
     ▼   |                     |
   ◇E46◇ |                     |
     │   |                     |
     ▼   |                     |
  ┌─────┐|                     |
  │ E48 │|                     |
  └─────┘|                     |
     │   |                     |
     ▼   |    VK               |
  ┌─────┐├────────────────►┌─────┐
  │ E50 │|                 │ E52 │
  └─────┘|                 └─────┘
```

**Fig.7**

```
        11                    30
         |                     |
         |  FCT,I2      ┌─────┐ |
  ┌─────┐|◄────────────│ E60 │ |
  │ E61 │|     D       └─────┘ |
  └─────┘├────────────────►┌─────┐
         |                 │ E62 │
         |                 └─────┘
         |                    │
         |                    ▼
         |     R           ┌─────┐
         |◄────────────────│ E64 │
   ◇E66◇ |                 └─────┘
     │   |                     |
     ▼   |                     |
   ◇E68◇ |                     |
     │   |                     |
     ▼   |                     |
  ┌─────┐|                     |
  │ E70 │|                     |
  └─────┘|                     |
```

## RÉFÉRENCES CITÉES DANS LA DESCRIPTION

**Documents brevets cités dans la description**

- US 2013099892 A